# EUROPEAN PATENT SPECIFICATION

(11) **EP 2 648 092 B1**
(45) Date of publication and mention of the grant of the patent: **19.06.2019**
(21) Application number: 12002467.4
(22) Date of filing: 04.04.2012
(51) Int. Cl.: G06F 9/4401, G06F 8/65

(54) **Updating method and multi-domain embedded system**
Aktualisierungsverfahren und eingebettetes Mehrfachdomänensystem
Procédé d'actualisation et système intégré multidomaines

(43) Date of publication of application: 09.10.2013
(73) Proprietor: Harman Becker Automotive Systems GmbH, 76307 Karlsbad (DE)
(72) Inventor: Broghammer, Markus, 76337 Waldbronn (DE); Fries, Dirk, 75334 Straubenhardt (DE)
(74) Representative: Grünecker Patent- und Rechtsanwälte PartG mbB

(56) References cited:
- WO-A2-02/067483
- US-B1- 6 934 956

## Description

The present invention relates to a method for updating a multi-domain embedded system and to a multi-domain embedded system.

From WO 02/067483 A2 a "Automatic embedded host configuration system and method" is known. Furthermore, from U.S. 6 934 956 B1 a "Method and apparatus for installing an operating system" is known From US 2009/0089815 "a multi-domain environment implemented by a hypervisor in which device drivers are installed per domain" is known.

Software updating is known from http://de.wikipedia.org/wiki/Update, last modified on January 27, 2012 (English version: http:// en.wikipedia.org/wiki/Patch_%28computing%29, last modified on January 6, 2012). In the PC segment, software update mechanisms exist which check whether a software update is necessary, either regularly or when a new device is plugged in. As a rule, a software update includes minor improvements such as optimizations in the program execution speed and eliminates error within a certain software release, which is also referred to as a service release, patch or hot fix. Updates that relate to the area of computer security are called security updates. They ensure that security gaps in programs are closed. For the operating system, in particular, all available security updates should be installed immediately after a new installation and at regular intervals of several days thereafter, in order to close known security gaps. Microsoft's Patch Day, on which Windows products are updated to the latest version once a month, is known in this connection.

Firmware is known from http://en.wikipedia.org/wiki/Firmware, last modified on January 27, 2012. In electronic systems and computing, firmware is a term often used to denote the fixed, usually rather small, programs and/or data structures that internally control various electronic devices. Typical examples of devices containing firmware range from end-user products such as remote controls or calculators, through computer parts and devices like hard disks, keyboards, TFT screens or memory cards, all the way to scientific instrumentation and industrial robotics. Also more complex consumer devices, such as mobile phones, digital cameras, synthesizers, etc., contain firmware to enable the device's basic operation as well as implementing higher-level functions. There are no strict boundaries between firmware and software, as both are quite loose descriptive terms. However, the term firmware was originally coined in order to contrast to higher level software which could be changed without replacing a computer hardware component, and firmware is typically involved with very basic low-level operations without which a device would be completely non-functional. Firmware is also a relative term, as most embedded devices contain firmware at more than one level. Subsystems such as CPUs, flash chips, communication controllers, LCD modules, and so on, have their own (usually fixed) program code and/or microcode, regarded as "part of the hardware" by the higher-level(s) firmware. Low-level firmware typically resides in a PLA structure or in a ROM (or OTP/PROM), while higher level firmware (often on the border to software) typically employs flash memory to allow for updates, at least in modern devices. Common reasons for updating firmware include fixing bugs or adding features to the device. Doing so usually involves loading a binary image file provided by the manufacturer Into the device, according to a specific procedure; this is sometimes intended to be done by the end user.

The object of the invention is to improve as much as possible a method for updating a multi-domain embedded system.

This object is achieved by a method having the features of the Independent claim 1. Advantageous refinements are the subject matter of dependent claims and included in the description.

Accordingly, a method for updating a multi-domain embedded system is provided.

In the method, an identification of a device connected to an Interface of the system is ascertained. The system is updated if the device is not supported by the system.

In the method, a supporting driver name of a supporting driver which supports the device Is ascertained.

In the method at least one affected domain is ascertained, the domain having the supporting driver.

In the method, a configuration label of a current configuration of the system is ascertained. The configuration label has a domain file list of files which are associated with the affected domain.

In the method, the configuration label and the supporting driver name and the Identification are transferred to a configuration database.

In the method, a new configuration label of a new configuration of the system and a file list are ascertained by means of the configuration database. The ascertainment Is carried out based on the transferred configuration label and the transferred supporting driver name and the transferred identification as input variables. The file list defines files of drivers to be updated in order to migrate from the current configuration to the new configuration.

In the method, binary data of the files of the drivers and the file list and the new configuration label are transferred to the system.

In the system, the drivers are updated by means of the binary data and the file list.

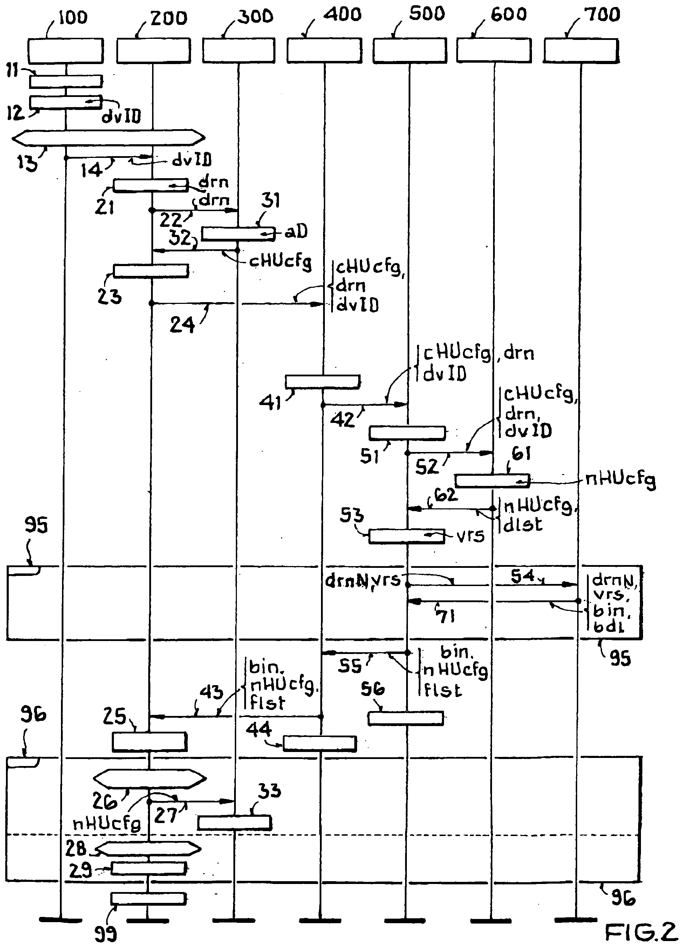

Due to a specific embodiment of the method explained above, as illustrated, for example, in Figure 2, a plurality of advantages is achieved.

A minimal approach Is achieved by ascertaining the file list, so that only the files of the required drivers which are needed for the update must be transferred to the system. The update may be carried out very quickly hereby. The system is again ready for use as quickly as possible after a short update time. The vehicle having the system Is thus soon ready for operation again. Since only the drivers of the affected domain are updated, the drivers of unaffected domains remain unchanged, so that errors during the update usually do not impair other functions of the system.

A further object of the Invention is to provide a multi-domain embedded system that Is improved as far as possible.

This object is achieved by the system having the features of the Independent claim 6. Advantageous refinements are Included in the description.

Accordingly, a multi-domain embedded system is provided which has an interface for connecting a device and for ascertaining an identification of the device connected to the interface. The system is configured for updating.

The system is configured to ascertain a supporting driver name of a supporting driver which supports the device.

The system is configured to ascertain at least one affected domain. The affected domain has the supporting driver.

The system is configured to ascertain a configuration label of a current configuration of the system. The configuration label has a domain file list of files which are associated with the affected domain.

The system is configured to send the configuration label and the supporting driver name and the identification to a configuration database.

The system is configured to receive binary data of files of drivers to be updated. The system is configured to receive a file list and a new configuration label. The binary data and the file list and the new configuration label are based on the transferred configuration label and the supporting driver name and the identification. The file list defines the files of the drivers to be updated In order to migrate from the current configuration to the new configuration.

The system is configured to update the drivers by means of the binary data and the file list.

The embodiments described below relate to both the multi-domain embedded system and to the update method. Functional features of the system may be derived from method features. Method features may be derived from functions of the system.

Advantageously the domain, also referred to as application domain, is a mechanism used to isolate executed software applications from one another so that they do not affect each other. Each domain has its own virtual address space which scopes the resources for the application domain using that address space.

According to one advantageous embodiment, the configuration label, the supporting driver name and the identification are transferred to the configuration database via a network connection. The system advantageously has an online module for a wirebound connection or a wireless connection. The configuration database Is advantageously disposed outside the system. The configuration database at a central location is preferably accessible from a large number of systems. It is also possible to transfer the configuration label, the supporting driver name and the identification by means of a storage medium such as a USB stick and to further transfer the configuration label, the supporting driver name and the identification, for example, from the storage medium, by means of a network connection.

The new configuration label is preferably ascertained by means of the configuration database, In that mutual dependencies of the files of the domain are evaluated and/or the mutual dependencies are defined in a table, for example In the form of an LUT (lookup table), so that the new configuration label is read from the configuration database.

In a preferred embodiment, current binary data is copied. After the copying the current binary data Is overwritten by the transferred binary for updating. The current binary data Is only a part of data of the system, that is overwritten during the update process, so that for copying the current binary data is defined by the file list as well. After the copying, the current binary data is overwritten by the transferred binary data. The copied current binary data is preferably buffered in a separate memory space. The buffered binary data Is preferably written back if it is ascertained that the update has failed. If the update is successful the copied binary data is deleted. This embodiment achieves the advantage that a rollback also functions correspondingly quickly, since only the drivers on the driver list must be reset to the previous version.

In an advantageous embodiment, the file list is ascertained based on a driver list. The driver list is ascertained by means of the configuration database based on the transferred configuration label and the transferred supporting driver name and the transferred Identification as input variables. The driver list contains all drivers to be updated to migrate from the current to the new configuration. Preferably no additional drivers are contained in the driver list.

According to an advantageous embodiment, the driver list has a subset of all files of the affected domain. The set of all files of the affected domain is the superset. The system is preferably configured to ascertain a subset of all files of the affected domain.

According to an advantageous embodiment, a version is ascertained for each driver contained in the driver list based on resolving the driver dependencies of the drivers of the driver list.

The embodiments described above are particularly advantageous Individually as well as in combination. All embodiments may be combined with each other. Some possible combinations are explained in the description of the exemplary embodiments in the figures. However, these possibilities illustrated therein for combining the embodiments are not final.

The invention is explained in greater detail below based on embodiments illustrated In the drawings, where
- Figure 1: shows a schematic representation including function blocks; and
- Figure 2: shows a schematic diagram of a method sequence.

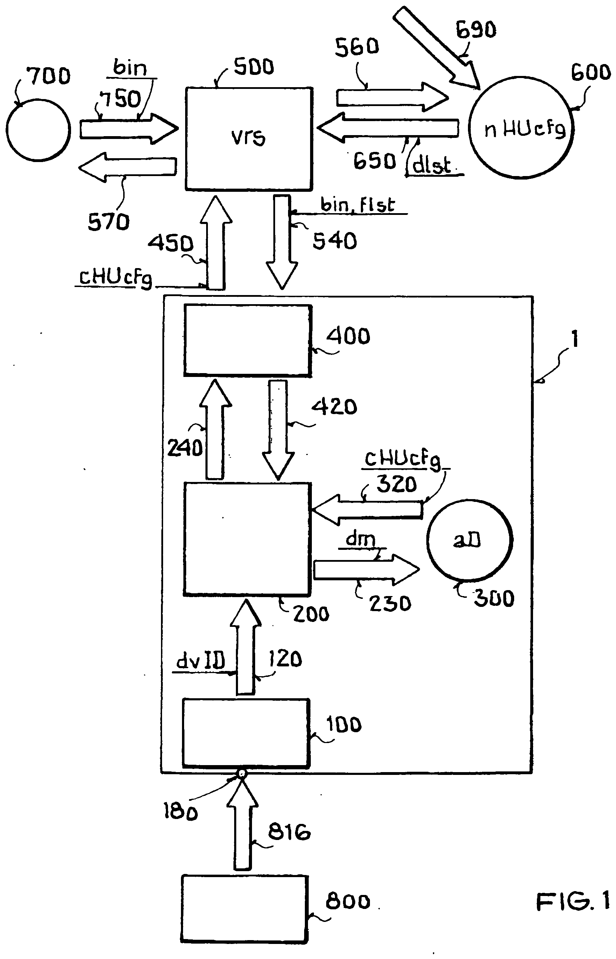

Figure 1 shows an exemplary embodiment with the aid of a schematic representation including function blocks. The function blocks have a multi-domain embedded system 1. Multi-domain embedded system 1 has, for example, ten domains. The domains are used to isolate executed software applications from one another so that they do not affect each other. Each domain has its own address space in a memory of the system. Multi-domain embedded system 1 is referred to hereinafter as system 1.

In the exemplary embodiment in Figure 1, system 1 has a device manager 100 for detecting a device 800, an update manager 200 for driver management, a driver database 300 and an online module 400 for connecting and caching.

Rapid development is taking place In the multimedia sector. Systems used in the automotive sector have a long life cycle, which is why a new type of device, module or medium may be Introduced into the system 1 (e.g., a new MP3 player, a new device generation or a new file system, for example extFAT, etc.) which is not supported by the current configuration of system 1. Often, only a software update is needed to permit the functionality of the device. In less frequent cases, a hardware change is necessary. System 1 according to the exemplary embodiment in Figure 1 is thus configured for updating.

Once a new device, a new medium or a new component has been inserted into the automotive system via an interface 180 (e.g., by the user, a service station, etc.), a check should be made of whether new drivers or software updates are necessary or are available therefore based on a local (offline) or online database 600 or a service provider via any protocol and any medium (e.g., wirebound or wireless).

In the exemplary embodiment in Figure 1, an identification dvID of a device 800 connected to an Interface 180 of the system 1 is ascertained. A transfer 810 of data which characterizes the external device 800 is carried out from the device 800 to the device manager 100 of the system 1 via the interface 180. These new drivers or software updates are to be loaded or installed semi-automatically (e.g. by prompting the user) or fully automatically. If an incompatibility occurs (i.e., the update Is not possible), a corresponding message Is to be displayed. For this purpose, all necessary parameters (such as vendor ID, device ID, serial number, firmware version, software version, etc.) are ascertained for an identification dvID of the new device 800 and taken into account during the update. This makes it possible to automatically detect and install required drivers when the new device 800 or medium or a new component is detected in the automotive system 1. Even hardware changes are detectable (e.g., support for the new generation of SD cards, SDXC or USB 3.0). The process may notify the end user to take his vehicle to the nearest service station for updating.

In the exemplary embodiment in Figure 1, the system 1 Is updated if the device 800 connected to the interface 180 is not supported by the system 1.

The system 1 is configured to ascertain a supporting driver name drn of a supporting driver which supports the device 800. In the exemplary embodiment in Figure 1, the device manager 100 is connected to the update manager 200 for this purpose, the device manager 100 transferring the identification dvID to the update manager 200 with the aid of transfer 120.

The system 1 is configured to ascertain at least one affected domain aD. The affected domain aD has the supporting driver. For this purpose, the update manager 200 Is connected to the driver database 300 of the system 1 for transfer 230 of the supporting driver name drn. The driver database 300 is configured to ascertain the affected domain based on the supporting driver name drn. For example, all driver names associated with one domain are stored In table form, so that each name in the table can be compared with the supporting driver name drn. In case the table contains the supporting driver name drn the domain aD is affected.

The system 1 is configured to ascertain a configuration label cHUcfg of a current configuration of the system 1 which Is associated with affected domain aD. The driver database 300 is configured to generate or read out the configuration label cHUcfg of the current configuration. The configuration label cHUcfg has a domain file list of files which belong to one or more affected domains aD. The cconfiguration label cHUcfg reaches the update manager 200 with the aid of transfer 320.

The system 1 is configured to send the configuration label cHUcfg of the current configuration and the supporting driver name drn and the identification dvID of the device 800 to a configuration database 600, the configuration database 600 being outside the system 1. The configuration database 600 is configured to evaluate necessary data for updating depending on the configuration label cHUcfg and the supporting driver name drn and identification dvID input. In the exemplary embodiment in Figure 1, an online portal 500 for a network connection is also provided. In the system 1, the update manager 200 is connected to the online module 400 of the system 1. Via a network (not illustrated), the configuration label cHUcfg is transferred from the update manager 200 to the online module 400 with the aid of a transfer 240 and from the online module 400 to the online portal 500 with the aid of another transfer 450.

The System 1 is configured to receive binary data bin of the files of a file list fist for driver files and also to receive a new configuration label nHUcfg. To retrieve binary data bin at a later point, the online portal 500 transfers the current configuration label cHUcfg together with the driver name drn and the Identification dvID to the configuration database 600 with the aid of transfer 560 for the purpose of ascertaining the new configuration label nHUcfg, which is transferred back to the online portal 500 together with a driver list dist with the aid of transfer 650. The configuration database 600 may also be referred to as head unit configuration database 600. With the aid of corresponding programming 690 by an administration, dependencies which are evaluated to select the correct files containing binary data bin are stored in the head unit configuration database 600. The dependencies are stored, for example, in a dependency spreadsheet. The file names of the ascertained files are specified in file list fist, versions vrs of the drivers being ascertained by the online portal 500. If the file names and version vrs of each driver is recorded in driver list dlst, associated binary data bin may be read from a driver data repository 700 with the aid of query 570 and made available to the online portal 500 with the aid of transfer 750. Binary data bin and a file list fist and the new configuration label nHUcfg are based on the transferred configuration label cHUcfg and the driver name drn and the identification dvID. The file list fist defines files of drivers to be updated in order to migrate from the current configuration to the new configuration. Driver list dlst defines the drivers for the update as well as their versions vrs In order to migrate from the current configuration to the new configuration. Once required binary data bin and the file list fist have been transferred to the system 1 using transfer 540, the system 1 is configured to update the drivers with the aid of binary data bin of the driver files and the file list fist.

Due to the approach of the exemplary embodiment in Figure 1, it is possible to adapt the system 1 in smaller, incremental steps In order to follow the changes in the media landscape. New devices, new media or new modules may thus be supported by the system 1, it being possible to reliably check whether the support is ruled out by dependencies or incompatibilities.

Function blocks 100, 200, 300, 400, device manager 100, update manager 200, driver database 300 and online module 400 of a multi-domain embedded system 1 as well as function blocks 500, 600, 700, online portal 500, head unit configuration database 600 and driver repository 700 present in the network are illustrated schematically in Figure 2. In addition, a method sequence with reference to function blocks 100, 200, 300, 400, 500, 600, 700 Is Illustrated schematically in Figure 2. The method sequence shows the updating of the system 1 when a previously unsupported device 800 is connected to an interface (e.g., 180 In Figure 1) of the system 1.

In first step 11, the device 800 Is connected to the system 1, the device 800 being illustrated schematically in Figure 1. The device 800 is, for example, a USB device. The method is not limited to a particular type of interface but may be used for different types of interfaces, such as a USB interface, a SATA interface, a card interface, etc.

An identification dvID of the connected device 800 is ascertained in further step 12. The identification dvID has, for example, a device number and/or a type designation and/or a vendor ID. The identification dvID has all parameters that are necessary to ascertain a driver version of a driver which is compatible with the device 800.

In further step 13, the system 1 detects the fact that the device 800 Is not supported.

In further step 14, the device manager 100 notifies the update manager 200 of the unsupported device 800 by transferring the identification dvID to the update manager 200.

In the further step 21, the update manager 200 ascertains the driver name drn of a driver which supports the device 800. The update manager 200 identifies the driver and driver name drn which Is required to support the device 800, e.g., required USB driver. The driver usually has the same driver name drn before and after the update, while the driver version differs.

A configuration label cHUcfg of a current configuration is subsequently ascertained with the aid of the driver database 300. For this purpose, the update manager 200 sends the driver name drn to the driver database 300 in further step 22.

In further step 31, one or multiple affected domains aD Is/are ascertained with the aid of the driver database 300. Each affected domain aD has the the supporting driver. In addition, this affected domain aD may have additional drivers, the affected domain aD including a list of driver names, the affectedness being ascertained based on the driver names of the particular domain. Domain aD has a so-called dependency tree which defines the relationship between the files, i.e., the binary files which are compatible with each other in each case, on the basis of file versions. In the overwhelming number of cases, only one domain aD Is affected. In a few frequent cases, two domains aD are affected.

In the same step 31, a configuration label cHUcfg of a current configuration of the system 1 which is associated with one or multiple affected domains aD is ascertained and transferred to the update manager 200 In step 32. The configuration label cHUcfg defines at least one file list of files which are associated with the affected domain aD, for example a number of portable executable files (.exe, .dll, .sys, .drv). The configuration label cHUcfg forms a data structure for the files and includes the particular current file version of the particular file.

An update session is generated in further step 23. The update session is an internal system session which consistently handles all actions of the current update process. In the exemplary embodiment in Figure 2, the configuration label cHUcfg and the driver name drn and the identification dvID are transferred to the online module 400 in this update session, which takes place in further step 24.

In further step 41, an online connection is set up from the online module 400 to the online portal 500. If a connection has already been established, step 41 may be skipped. In the exemplary embodiment in Figure 2, a connection is possible at any time if the online module 400 uses, for example, the TCP/IP protocol over a wireless connection, e.g., with the aid of UMTS or WLAN. Alternatively, a device connected therebetween (not illustrated) may be provided which establishes the connection to the online portal 500 and accepts/transfers data from and to the system 1, for example with the aid of USB.

The configuration label cHUcfg and the driver name drn and the identification dvID are transferred to the online portal 500 in further step 42. In addition, an update session Identification may be transferred from the online module 400 to the online portal 500. A session for the update process is also created in the online portal 500, which takes place in the further step 51.

In further step 52, the configuration label cHUcfg and the driver name drn and the identification dvID and optionally the update session identification are transferred from the online portal 500 to the head unit configuration database 600. A new configuration label nHUcfg is ascertained with the aid of the head unit configuration database 600. It is evaluated which new configuration has to be used to fulfil a proper update of the affected driver. The new configuration label nHUcfg contains all configuration data of the new configuration of the system 1 after a successful update.

Associated with the new configuration label nHUcfg, a driver list dlst is also ascertained with the aid of configuration database 600 based on the transferred configuration label cHUcfg of the current configuration and based on the driver name drn and the identification dvID of the device 800 as input variables. The new configuration label nHUcfg is ascertained by evaluating the files of the affected domain aD. For example, an associated entry in an LUT (lookup table) is read out for this purpose. The driver list dlst defines the driver names of the required drivers for the update.

In further step 62, the driver list dlst and the new configuration label nHUcfg and, If applicable, an identification of the session are transferred from the configuration database 600 to the online portal 500. In further step 53, a mutual dependency of the drivers on driver list dlst is resolved in the online portal 500, and the required versions of the drivers are ascertained and added to the driver list dlst as version labels vrs. The versions vrs of the drivers needed to migrate from the current configuration to the new configuration are ascertained. The mutual dependency of the drivers is not known to the system 1 itself, so that the dependency of the external device is ascertained by the online portal 500 in the exemplary embodiment in Figure 2.

The files on the driver list dlst are preferably a subset of all drivers of the affected domain aD. On the one hand, drivers having the same version do not have to be transferred for the update and, if applicable, only the files of the drivers which are not already present In the system 1 need to be transferred. The volume of the data to be transferred for updating the system 1 is significantly reduced thereby, compared to a conventional firmware update. The system 1 is therefore available again more quickly for use by the user.

A loop 95 repeats further steps 54 and 71 for each driver on the driver list dlst. In step 54, driver name drnN and version label vrs are transferred for each driver to be updated from the online portal 500 to the driver data repository 700. In loop 95, the driver data repository 700 returns a binary data list bdl and binary data bin and the driver name drnN and version label vrs for each driver on driver list dlst.

In further step 55, all files of all drivers to be updated are listed in a file list fist. The files containing the binary data bin of the files of each driver on driver list dlst. The file list fist defines files of the drivers to be updated in order to migrate from the current configuration to the new configuration. The file list and the new configuration label nHUcfg are transferred to the system 1 over a connection between the online portal 500 and the online module 400 of the system 1. In the exemplary embodiment in Figure 2, a session identification Is additionally transferred. The session identification is a unique identifier of the update process. The file list fist contains the files of all drivers for updating within this session. The new configuration label nHUcfg includes the names drnN of all drivers to be updated including the corresponding version Information vrs.

In the exemplary embodiment in Figure 2, the binary data bin of the driver files of each driver on the driver list dlst and the new configuration label nHUcfg and the file list fist and, if applicable, the session identification are transferred from the online module 400 to the update manager 200 In further step 43. In further step 44, the connection between the online module 400 and the online portal 500 may be cleared. The connection may also remain established for further functions and services, in which case step 44 is skipped.

The actual update process is started in further step 25. The drivers are updated according to file list fist with the aid of the binary data bin of the driver files in the system 1.

The result of the update process is illustrated schematically as alternative 96 in Figure 2. In the first case, the fact that the update process has been successfully completed is established In step 26, so that step 27 is carried out. In step 27, the new configuration label nHUcfg Is transferred to the driver database 300 of system 1 and stored therein in step 33.

In the other case, the update process falls, which is ascertained in further step 28. Based on the minimal approach explained by the exemplary embodiment in Figure 2, the previous versions of the few files affected, which are modified by the binary data bin in the update process, are copied and buffered in a memory of the update manager 200 before being overwritten. This would not be possible in the case of a full firmware update, so that the system 1 would potentially be no longer operational after a failed update process. Based on the minimal approach in the exemplary embodiment In Figure 2, however, only one domain aD is affected or two domains aD are affected, and the remaining domains remain operational without changes.

A so-called version rollback takes place in further step 29, wherein the previous versions of the affected files of the update process again overwrite new binary date bin and thus rebuilt the system 1 to the previous configuration without having to reload an older complete firmware for the system 1. Hence, the fallback mechanism ensures the operability of the system 1.

In final step 99, the update session is terminated. The system 1 subsequently operates In a normal application mode.

The Invention is not limited to the exemplary embodiments illustrated In Figures 1 and 2. For example, It is possible to add additional steps to the method sequence in Figure 2, for example, to first test the system following the update to see whether the additional device may be addressed, etc. It Is also possible to provide other or additional modules, such as memory elements for buffering possible updates, in the exemplary embodiment In Figure 2. The functionality of the system 1 according to Figure 1 may be particularly advantageously used for an automotive system, for example a head unit of a motor vehicle.

**List of Reference Numerals**

| | |
|---|---|
| 1 | Multi-domain embedded system |
| 100 | Device manager |
| 180 | Interface |
| 200 | Update manager |
| 300 | Driver database |
| 400 | Online module |
| 500 | Online portal |
| 600 | Head unit configuration database |
| 700 | Driver repository |
| 800 | Device |
| 120, 230, 240, 320, 420, 450, 540, 560, 570, 650, 750, 810 | Transfer |
| 690 | Programming |
| 11, 12, 13, 14, 21, 22, 23, 24, 25, 26, 27, 28, 29, 31, 41, 42, 43, 44, 51, 52, 53, 54, 55, 56, 61, 62, 71, 95, 96, 99 | Method step |
| | |
| dvID | Identification |
| drn, drnN | Driver name |
| aD | Domain |
| cHUcfg, nHUcfg | Configuration label |
| dlst | Driver list |
| bdl | Binary data list |
| vrs | Version |
| bin | Binary data |
| fist | File list |

## Claims

1. Method for updating a multi-domain embedded system (1) having multiple domains used to isolate executed software applications from one another, comprising the steps of:
- ascertaining (12) an identification (dvID) of a device (800) connected to an interface (180) of the system (1);
- detecting (13) that the device (800) is not supported by the system (1);
- ascertaining a supporting driver name (drn) of a supporting driver which supports the device (800) based on the identification (dvID);
- ascertaining at least one affected domain (aD) based on the ascertained supporting driver name (dn);
- ascertaining a configuration label (cHUcfg) of a current configuration of the system (1), the configuration label (cHUcfg) having a domain file list of files which are associated with the at least one affected domain (aD);
- transferring the configuration label (cHUcfg) and the supporting driver name (drn) and the identification (dvID) to a configuration database (600);
- ascertaining a new configuration label (nHUcfg) of a new configuration of the systems (1) and a file list (fist) by means of the configuration database (600) based on the transferred configuration label (cHUcfg) and the transferred supporting driver name (drn) and the transferred identification (dvID) as input variables, the file list (fist) defining only files of drivers of the at least one affected domain (aD) to be updated in order to migrate from the current configuration to the new configuration;
- transferring binary data (bin) of the files of the drivers and the file list (fist) and the new configuration label (nHUcfg) to the system (1); and
- updating the drivers in the system (1) by means of the binary data (bin) and the file list (fist).

2. The method according to claim 1,
- wherein current binary data is copied,
- wherein after the copying, the current binary data is overwritten by the transferred binary data (bin); and
- wherein the copied binary data is written back if it is ascertained that the update has failed.

3. The method according to one of the preceding claims,
- wherein the file list (fist) is ascertained based on a driver list (dlst), the driver list (dlst) being ascertained by means of the configuration database (600) based on the transferred configuration label (cHUcfg) and the transferred supporting driver name (drn) and the transferred identification (dvID) as input variables.

4. The method according to one of the preceding claims,
- wherein the driver list (dlst) has a subset of all files (superset) of the affected domain (aD).

5. The method according to one of the preceding claims,
- wherein for each driver contained In the driver list (dlst) a version (vrs) is ascertained based on resolving the driver dependencies of the drivers of the driver list (dlst).

6. A multi-domain embedded system (1), comprising
multiple domains used to isolate executed software applications from one another;
an interface (180) for connecting a device (800) and for ascertaining an identification (dvID) of the device (800) connected to the interface (180),
- wherein the system (1) is configured to detect that the device (800) is not supported by the system (1);
- wherein the system (1) is configured to ascertain a supporting driver name (drn) of a supporting driver which supports the device (800);
- wherein the system (1) is configured to ascertain at least one affected domain (aD)based on the ascertained supporting driver name (dm);
- wherein the system (1) Is configured to ascertain a configuration label (cHUcfg) of a current configuration of the system (1), the configuration label (cHUcfg) having a domain file list of files which are associated with the at least one affected domain (aD);
- wherein the system (1) is configured to send the configuration label (cHUcfg) and the supporting driver name (drn) and the identification (dvID) to a configuration database (600);
- wherein the system (1) is configured to receive binary data (bin) of files of drivers to be updated and a file list (flst) and a new configuration label (nHUcfg), the binary data (bin) and the file list (flst) and the new configuration label (nHUcfg) being based on the transferred configuration label (cHUcfg) and the driver name (drn) and the identification (dvID), and the file list (fist) defining only the files of the drivers of the at least one affected domain (aD) to be updated in order to migrate from the current configuration to the new configuration; and
- wherein the system (1) is configured to update the drivers by means of the binary data (bin) and the file list (flst).

## Patentansprüche

1. Verfahren zum Aktualisieren eines eingebetteten Mehrfachdomänensystems (1), das mehrfache Domänen aufweist, die verwendet werden, um ausgeführte Software-Anwendungen voneinander zu isolieren, umfassend die folgenden Schritte:
- Ermitteln (12) einer Identifikation (dvID) eines Geräts (800), das mit einer Schnittstelle (180) des Systems (1) verbunden ist;
- Feststellen (13), dass das Gerät (800) nicht vom System (1) unterstützt wird;
- Ermitteln des Namens eines unterstützenden Treibers (drn) eines unterstützenden Treibers, der das Gerät (800) unterstützt, basierend auf der Identifikation (dvID);
- Ermitteln mindestens einer betroffenen Domäne (aD) basierend auf dem ermittelten Namen des unterstützenden Treibers (dn);
- Ermitteln eines Konfigurationslabels (cHUcfg) einer aktuellen Konfiguration des Systems (1), wobei das Konfigurationslabel (cHUcfg) eine Domänendateiliste von Dateien aufweist, die mit der mindestens einen betroffenen Domäne (aD) verbunden sind;
- Übertragen des Konfigurationslabels (cHUcfg) und des Namens des unterstützenden Treibers (drn) und der Identifikation (dvID) an eine Konfigurationsdatenbank (600);
- Ermitteln eines neuen Konfigurationslabels (nHUcfg) einer neuen Konfiguration der Systeme (1) und einer Dateiliste (flst) mittels der Konfigurationsdatenbank (600) basierend auf dem übertragenen Konfigurationslabel (cHUcfg) und dem übertragenen Namen des unterstützenden Treibers (drn) und der übertragenen Identifikation (dvID) als Eingangsvariablen, wobei die Dateiliste (flst) nur Dateien von Treibern der mindestens einen betroffenen Domäne (aD) definiert, die aktualisiert werden müssen, um von der aktuellen Konfiguration zur neuen Konfiguration überzugehen;
- Übertragen der binären Daten (bin) der Dateien der Treiber und der Dateiliste (flst) und des neuen Konfigurationslabels (nHUcfg) an das System (1); und
- Aktualisieren der Treiber im System (1) mittels der binären Daten (bin) und der Dateiliste (flst).

2. Verfahren nach Anspruch 1,
- wobei die aktuellen binären Daten kopiert werden,
- wobei nach dem Kopieren die aktuellen binären Daten mit den übertragenen binären Daten (bin) überschrieben werden; und
- wobei die kopierten binären Daten zurückgeschrieben werden, falls festgestellt wird, dass die Aktualisierung fehlgeschlagen ist.

3. Verfahren nach einem der vorstehenden Ansprüche,
- wobei die Dateiliste (flst) basierend auf einer Treiberliste (dlst) ermittelt wird, wobei die Treiberliste (dlst) mittels der Konfigurationsdatenbank (600) basierend auf dem übertragenen Konfigurationslabel (cHUcfg) und dem übertragenen Namen des unterstützenden Treibers (drn) und der übertragenen Identifikation (dvID) als Eingangsvariablen ermittelt wird.

4. Verfahren nach einem der vorstehenden Ansprüche,
- wobei die Treiberliste (dlst) eine Untermenge aller Dateien (Obermenge) der betroffenen Domäne (aD) aufweist.

5. Verfahren nach einem der vorstehenden Ansprüche,
- wobei für jeden Treiber, der in der Treiberliste (dlst) enthalten ist, eine Version (vrs) basierend auf dem Lösen der Treiberabhängigkeiten der Treiber der Treiberliste (dlst) ermittelt wird.

6. Eingebettetes Mehrfachdomänensystem (1), umfassend mehrfache Domänen, die verwendet werden, um ausgeführte Software-Anwendungen voneinander zu trennen;
eine Schnittstelle (180) zum Anschließen eines Geräts (800) und zum Ermitteln einer Identifikation (dvID) des Geräts (800), das an die Schnittstelle (180) angeschlossen ist,
- wobei das System (1) konfiguriert ist, um zu erkennen, dass das Gerät (800) nicht vom System (1) unterstützt wird;
- wobei das System (1) konfiguriert ist, um den Namen eines unterstützenden Treibers (drn) eines unterstützenden Treibers, der das Gerät (800) unterstützt, zu ermitteln;
- wobei das System (1) konfiguriert ist, um mindestens eine betroffene Domäne (aD) basierend auf dem ermittelten Namen des unterstützenden Treibers (drn) zu ermitteln;
- wobei das System (1) konfiguriert ist, um ein Konfigurationslabel (cHUcfg) einer aktuellen Konfiguration des Systems (1) zu ermitteln, wobei das Konfigurationslabel (cHUcfg) eine Domänendateiliste von Dateien aufweist, die mit der mindestens einen betroffenen Domäne (aD) verbunden sind;
- wobei das System (1) konfiguriert ist, um das Konfigurationslabel (cHUcfg) und den Namen des unterstützenden Treibers (drn) und die Identifikation (dvID) an eine Konfigurationsdatenbank (600) zu senden;
- wobei das System (1) konfiguriert ist, um binäre Daten (bin) von Dateien von Treibern, die zu aktualisieren sind, und eine Dateiliste (flst) und ein neues Konfigurationslabel (nHUcfg) zu empfangen, wobei die binären Daten (bin) und die Dateiliste (flst) und das neue Konfigurationslabel (nHUcfg) auf dem übertragenen Konfigurationslabel (cHUcfg) und dem Namen des Treibers (drn) und der Identifikation (dvID) basieren, und wobei die Dateiliste (flst) nur die Dateien der Treiber der mindestens einen betroffenen Domäne (aD) definiert, die aktualisiert werden müssen, um von der aktuellen Konfiguration zur neuen Konfiguration überzugehen; und
- wobei das System (1) konfiguriert ist, um die Treiber mittels der binären Daten (bin) und der Dateiliste (flst) zu aktualisieren.

## Revendications

1. Procédé pour actualiser un système intégré multi-domaines (1) ayant de multiples domaines utilisés pour isoler des applications logicielles exécutées l'une de l'autre, comprenant les étapes suivantes :
- la vérification (12) d'une identification (dvID) d'un dispositif (800) connecté à une interface (180) du système (1) ;
- la détection (13) que le dispositif (800) n'est pas supporté par le système (1) ;
- la vérification d'un nom de pilote de support (drn) d'un pilote de support qui supporte le dispositif (800) sur la base de l'identification (dvID) ;
- la vérification d'au moins un domaine concerné (aD) sur la base du nom de pilote de support (dn) vérifié ;
- la vérification d'une étiquette de configuration (cHUcfg) d'une configuration actuelle du système (1), l'étiquette de configuration (cHUcfg) ayant une liste de fichiers de domaine de fichiers qui sont associés à l'au moins un domaine concerné (aD) ;
- le transfert de l'étiquette de configuration (cHUcfg) et du nom de pilote de support (drn) et de l'identification (dvID) à une base de données de configuration (600) ;
- la vérification d'une nouvelle étiquette de configuration (nHUcfg) d'une nouvelle configuration des systèmes (1) et d'une liste de fichiers (flst) au moyen de la base de données de configuration (600) sur la base de l'étiquette de configuration (cHUcfg) transférée et du nom de pilote de support (drn) transféré et de l'identification (dvID) transférée comme des variables d'entrée, la liste de fichiers (flst) définissant seulement des fichiers de pilotes de l'au moins un domaine concerné (aD) à actualiser de manière à migrer de la configuration actuelle à la nouvelle configuration ;
- le transfert de données binaires (bin) des fichiers des pilotes et de la liste de fichiers (flst) et de la nouvelle étiquette de configuration (nHUcfg) au système (1) ; et
- l'actualisation des pilotes dans le système (1) au moyen des données binaires (bin) et de la liste de fichiers (flst).

2. Procédé selon la revendication 1,
- dans lequel des données binaires actuelles sont copiées,
- dans lequel, après la copie, les données binaires actuelles sont écrasées par les données binaires (bin) transférées ; et
- dans lequel les données binaires copiées sont réécrites s'il est vérifié que l'actualisation a échoué.

3. Procédé selon une des revendications précédentes,
- dans lequel la liste de fichiers (flst) est vérifiée sur la base d'une liste de pilotes (dlst), la liste de pilotes (dlst) étant vérifiée au moyen de la base de données de configuration (600) sur la base de l'étiquette de configuration (cHUcfg) transférée et du nom de pilote de support (drn) transféré et de l'identification (dvID) transférée comme des variables d'entrée.

4. Procédé selon une des revendications précédentes,
- dans lequel la liste de pilotes (dlst) a un sous-ensemble de tous les fichiers (super-ensemble) du domaine concerné (aD).

5. Procédé selon une des revendications précédentes,
- dans lequel, pour chaque pilote contenu dans la liste de pilotes (dlst), une version (vrs) est vérifiée sur la base de la résolution des dépendances de pilote des pilotes de la liste de pilotes (dlst).

6. Système intégré multi-domaines (1) comprenant de multiples domaines utilisés pour isoler des applications logicielles exécutées l'une de l'autre ;
une interface (180) pour connecter un dispositif (800) et pour vérifier une identification (dvID) du dispositif (800) connecté à l'interface (180),
- dans lequel le système (1) est configuré pour détecter que le dispositif (800) n'est pas supporté par le système (1) ;
- dans lequel le système (1) est configuré pour vérifier un nom de pilote de support (drn) d'un pilote de support qui supporte le dispositif (800) ;
- dans lequel le système (1) est configuré pour vérifier au moins un domaine concerné (aD) sur la base du nom de pilote de support (drn) vérifié ;
- dans lequel le système (1) est configuré pour vérifier une étiquette de configuration (cHUcfg) d'une configuration actuelle du système (1), l'étiquette de configuration (cHUcfg) ayant une liste de fichiers de domaine de fichiers qui sont associés à l'au moins un domaine concerné (aD) ;
- dans lequel le système (1) est configuré pour envoyer l'étiquette de configuration (cHUcfg) et le nom de pilote de support (drn) et l'identification (dvID) à une base de données de configuration (600) ;
- dans lequel le système (1) est configuré pour recevoir des données binaires (bin) de fichiers de pilotes à actualiser et une liste de fichiers (flst) et une nouvelle étiquette de configuration (nHUcfg), les données binaires (bin) et la liste de fichiers (flst) et la nouvelle étiquette de configuration (nHUcfg) étant basées sur l'étiquette de configuration (cHUcfg) transférée et le nom de pilote (drn) et l'identification (dvID), et la liste de fichiers (flst) définissant seulement les fichiers des pilotes de l'au moins un domaine concerné (aD) à actualiser de manière à migrer de la configuration actuelle à la nouvelle configuration ; et
- dans lequel le système (1) est configuré pour actualiser les pilotes au moyen des données binaires (bin) et de la liste de fichiers (flst).
